# EUROPÄISCHE PATENTSCHRIFT

(11) **EP 3 416 813 B1**
(45) Veröffentlichungstag und Bekanntmachung des Hinweises auf die Patenterteilung: **07.06.2023**
(21) Anmeldenummer: 17714187.6
(22) Anmeldetag: 28.03.2017
(51) Int. Cl.: B29C 67/00, B33Y 80/00

(54) **BEARBEITUNGSWERKZEUG UND VERFAHREN ZU SEINER HERSTELLUNG MITTELS EINES GENERATIVEN SCHICHTBAUPROZESSES**
PROCESSING TOOL AND METHOD FOR PRODUCTION THEREOF BY MEANS OF A GENERATIVE LAYER CONSTRUCTION PROCESS
OUTIL D'USINAGE ET SON PROCÉDÉ DE FABRICATION AU MOYEN D'UN PROCESSUS DE FABRICATION PAR COUCHES GÉNÉRATIF

(30) Priorität: 29.03.2016 DE 102016205147
(43) Veröffentlichungstag der Anmeldung: 26.12.2018
(73) Patentinhaber: EOS GmbH Electro Optical Systems, 82152 Krailling (DE)
(72) Erfinder: HEIN, Peter, 82067 Schäftlarn / Zell (DE)
(74) Vertreter: Prüfer & Partner mbB Patentanwälte · Rechtsanwälte
(86) Internationale Anmeldenummer: PCT/EP2017/057272
(87) Internationale Veröffentlichungsnummer: WO 2017/167726

(56) Entgegenhaltungen:
- EP-A1- 3 028 839
- DE-A1- 19 900 597
- GB-A- 2 358 829
- JP-A- 2014 065 180
- US-A1- 2014 255 647

## Beschreibung

Die vorliegende Erfindung bezieht sich auf ein Verfahren zur Bereitstellung eines Steuerbefehlssatzes zur Herstellung eines Bearbeitungswerkzeugs mittels einer generativen Schichtbauvorrichtung, auf eine entsprechend zur Herstellung des Bearbeitungswerkzeugs ausgelegte generative Schichtbauvorrichtung sowie auf ein generatives Schichtbauverfahren zur Herstellung des Bearbeitungswerkzeugs.

US 2014/255647 A1 beschreibt die Herstellung von Bauteilen mit Hohlgeometrien durch ein additives Herstellverfahren. Die Bauteile enthalten dabei Stützstrukturen, die nach Fertigstellen durch Auflösen in einer Lösungsflüssigkeit entfernt werden.

JP 2014 065180 A hat es sich zur Aufgabe gemacht, ein Verfahren zum Erzeugen von Modelldaten eines mittels eines additiven Herstellverfahrens herzustellenden Objekts bereitzustellen, mittels welchem unverfestigtes Pulver aus Hohlräumen in dem Objekt leicht entfernt werden kann.

GB 2 358 829A beschreibt ein mittels eines Rapid Protoyping-Verfahrens herzustellenden Messwerkzeug zum Überprüfen von Abmessungen eines Bauteils. Dabei wird die Geometrie des Messwerkzeugs von der Geometrie des zu überprüfenden Objekts abgeleitet, indem auf die CAD-Daten des Objekts zugegriffen wird.

EP 3 028 839 A1 ist eine ältere Anmeldung unter Art. 54(3) EPÜ, in der ein Objekt und ein Werkzeug mittels Lasersinterns gemeinsam hergestellt werden. Dabei ist das Werkzeug zur Nachbearbeitung des Objekts ausgelegt.

DE 199 00 597 A1 beschreibt ein Verfahren zur Herstellung von Blechumformungswerkzeugen, bei dem ausgehend von einem dreidimensionalen Volumenmodell des Blechumformungswerkzeuges die dreidimensionalen Koordinaten der Modelloberfläche erzeugt werden. Die 3D-Volumenmodelldaten werden dabei auch durch 3D-CAD-Modellierung des herzustellenden Blechumformteils und nachfolgende 3D-Werkzeugmodelldatengenerierung erzeugt.

Bearbeitungswerkzeuge für die Bearbeitung von Werkstückoberflächen werden normalerweise für mehrere verschiedenartige Werkstücke eingesetzt. Diese Universalität der Einsetzbarkeit der Werkzeuge ist dann von Nachteil, wenn die zu bearbeitende Werkstückoberfläche eine komplexe Gestalt aufweist oder schwer zugänglich ist. In den letztgenannten Fällen kann sich der Bearbeitungsvorgang, bei dem das Bearbeitungswerkzeug über die Werkstückoberfläche bewegt wird, als sehr kompliziert bzw. im Extremfall als unmöglich erweisen.

Die Aufgabe der vorliegenden Erfindung ist es daher, ein Bearbeitungswerkzeug und ein Verfahren zu dessen Herstellung bereitzustellen, durch welche auch sehr komplex gestaltete oder sehr schwer zugängliche Oberflächen eines Werkstücks mit geringem Aufwand bearbeitet werden können.

Die Aufgabe wird gelöst durch ein Verfahren nach Anspruch 1, ein Herstellverfahren nach Anspruch 8 und ein Bearbeitungsverfahren nach Anspruch 13 sowie eine Vorrichtung nach Anspruch 6 und eine generative Schichtbauvorrichtung nach Anspruch 7 und ein Computerprogramm nach Anspruch 14. Weiterbildungen der Erfindung sind in den abhängigen Ansprüchen beschrieben. Dabei können Merkmale, die in den abhängigen Ansprüchen bzw. in der folgenden Beschreibung im Zusammenhang mit einer Anspruchskategorie erwähnt werden, auch zur Weiterbildung der Gegenstände jeder anderen Anspruchskategorie verwendet werden, es sei denn, dies wird explizit ausgeschlossen.

Ein erfindungsgemäßes Verfahren zur Bereitstellung eines Steuerbefehlssatzes zur Herstellung eines Bearbeitungswerkzeugs mittels einer generativen Schichtbauvorrichtung umfasst mindestens folgende Schritte:
- Bereitstellung von computerbasierten Modelldaten, die mindestens eine mit dem Bearbeitungswerkzeug zu bearbeitende Teiloberfläche eines Objekts repräsentieren, welche sich innerhalb eines Kanals durch das Objekt befindet,
- Erzeugen eines computerbasierten Modells des Bearbeitungswerkzeugs mit einer mit der mindestens einen Teiloberfläche im Rahmen eines Bearbeitungsvorgangs wechselwirkenden Wechselwirkungsfläche dergestalt, dass die Wechselwirkungsfläche im geometrischen Sinne ähnlich zu der zu bearbeitenden Teiloberfläche des Objekts ist,
- Erzeugen eines Steuerbefehlssatzes für eine generative Schichtbauvorrichtung, durch den die Herstellung des Bearbeitungswerkzeugs zusammen mit dem Objekt auf der Grundlage des die Wechselwirkungsfläche enthaltenden computerbasierten Modells des Bearbeitungswerkzeugs dergestalt implementiert wird, dass die Wechselwirkungsfläche des Bearbeitungswerkzeugs während der Herstellung über Stützstrukturen mit der zu bearbeitenden Teiloberfläche des Objekts verbunden ist.

Erfindungsgemäß wird ein Bearbeitungswerkzeug für ein Werkstück mittels einer generativen Schichtbauvorrichtung hergestellt. Durch das gewählte Herstellverfahren ist es möglich, mit vertretbarem Aufwand individuell auf Werkstücke zugeschnittene Bearbeitungswerkzeuge herzustellen. Erfindungsgemäß wird dabei mittels der Bereitstellung eines entsprechenden Steuerbefehlssatzes zur Herstellung des Bearbeitungswerkzeugs die verwendete generative Schichtbauvorrichtung so konfiguriert, dass ein optimiertes Bearbeitungswerkzeug hergestellt werden kann.

Dabei wird das Bearbeitungswerkzeug mit einer mit einer Teiloberfläche des Werkstücks wechselwirkenden Wechselwirkungsfläche versehen, welche an die zu bearbeitende Teiloberfläche geometrisch angepasst ist. Die Anpassung besteht darin, dass die Wechselwirkungsfläche im geometrischen Sinne ähnlich zu der Teiloberfläche des zu bearbeitenden Werkstücks ist. Hätte die zu bearbeitende Teiloberfläche beispielsweise die Gestalt der gekrümmten Oberfläche einer Halbkugel, so wäre das Bearbeitungswerkzeug in diesem Fall mit einer Wechselwirkungsfläche ausgestattet, die ebenfalls halbkugelförmig ist, jedoch, damit eine Bearbeitung der Teiloberfläche möglich ist, konkav, um mit der konvexen halbkugelförmigen Oberfläche des Werkstücks wechselwirken zu können (analog kann auch die zu bearbeitende Teiloberfläche konkav ausgebildet sein und die Wechselwirkungsfläche entsprechend konvex). Die Wechselwirkungsfläche kann identisch zu der Halbkugeloberfläche des Werkstücks sein, jedoch auch um einen bestimmten Prozentsatz größer oder kleiner als die zu bearbeitende Oberfläche sein, sodass geometrische Ähnlichkeit vorliegt. Geometrische Ähnlichkeit bedeutet dabei, dass die zu bearbeitende Teiloberfläche und die Wechselwirkungsfläche durch eine Ähnlichkeitsabbildung ineinander überführbar sind (ohne Berücksichtigung der Tatsache, dass beide Oberflächen unterschiedliche Texturen aufweisen können).

Das Bearbeitungswerkzeug könnte auch so ausgelegt werden, dass eine Mehrzahl von Teiloberflächen eines Werkstücks damit bearbeitet werden kann. In diesem Falle wiese das Bearbeitungswerkzeug bevorzugt eine entsprechende Anzahl an Wechselwirkungsflächen auf.

Hier handelt es sich bei der zu bearbeitenden Teiloberfläche um eine innen liegende Oberfläche, also einen Teil der Wandung eines Kanals durch das Werkstück. Bevorzugt ist das Bearbeitungswerkzeug einstückig.

Ein bevorzugter Anwendungsschwerpunkt liegt in der Bereitstellung von Bearbeitungswerkzeugen für eine Oberflächenbearbeitung an dem Werkstück. Dies umfasst beispielsweise Glättvorgänge der Werkstückoberfläche, beispielsweise durch Schleifen, Polieren oder Raspeln, wobei die Wechselwirkungsfläche parallel zur zu bearbeitenden Teiloberfläche des Werkstücks und in mechanischem Kontakt zu dieser bewegt wird. Mit mechanischem Kontakt ist gemeint, dass die Wechselwirkungsfläche zumindest mit Vorsprüngen der Werkstückoberfläche in Kontakt kommt, welche unerwünscht sind und von der Werkstückoberfläche entfernt werden sollen. Weiterhin könnte ein Bearbeitungswerkzeug als Wechselwirkungsfläche auch eine Schneide aufweisen, die parallel zur Werkstückoberfläche bewegt wird, um Vorsprünge an der Werkstückoberfläche abzuschneiden und an die Gestalt der Werkstückoberfläche angepasst ist.

Eine weitere Gruppe von bevorzugt herzustellenden Bearbeitungswerkzeugen umfasst solche, deren Wechselwirkungsfläche formschlüssig an eine Teiloberfläche des Werkstücks angefittet, d.h. angeformt, wird, beispielsweise um (stoßweise) gleichmäßigen Druck auf die Teiloberfläche auszuüben. Hierunter fallen also Hämmer.

Hohlräume in Objekten sind tendenziell von außerhalb des Objektes schwer zugänglich, selbst wenn sie eine oder mehrere Öffnungen aufweisen, also in mindestens eine Richtung offen sind. Soll beispielsweise eine innerhalb des Hohlraums vorhandene Oberfläche des Objekts (also ein Bereich der Hohlraumwandung) mit einem Werkzeug bearbeitet werden, so kann das Werkzeug nicht beliebig gegenüber der Oberfläche verkippt, verdreht oder verschoben werden, zum einen, da es unter Umständen größer als der Hohlraum selbst ist, zum anderen, da beim Bewegen des Werkzeugs dieses an verschiedenen Stellen an die Grenzen des Hohlraums stößt. Dabei sind der Gestalt von Hohlräumen in Objekten keine Grenzen gesetzt. Das erfinderische Vorgehen erlaubt hier, Werkzeuge mit einer Gestalt auszubilden, die an eine Bearbeitung innerhalb eines Kanals in einem Objekt angepasst sind.

Erfindungsgemäß ist das Bearbeitungswerkzeug dabei so ausgelegt, dass damit nach einer Herstellung des zu bearbeitenden Objekts mittels einer generativen Schichtbauvorrichtung im Innern des Hohlraums (Kanals) generierte Stützstrukturen entfernt werden können. Bei der generativen Schichtbaufertigung von Objekten, welche Hohlräume enthalten, ist es oft notwendig, Stützstrukturen in einem Hohlraum anzubringen, um die präzise Herstellung des Hohlraums in der gewünschten Form gewährleisten zu können. Diese Stützstrukturen sollen oftmals nach der Fertigstellung des Objekts nicht in dem Hohlraum verbleiben und müssen daher wieder aus dem Hohlraum entfernt werden. Ist ein Bearbeitungswerkzeug an die Form des Hohlraums angepasst, so kann mit diesem in einfacherer Weise eine Stützstruktur (beispielsweise ein Stabgeflecht) aus dem Hohlraum entfernt werden, da die Fläche des Hohlraums gleichmäßiger bei der Bearbeitung überstrichen wird.

Wie bereits erwähnt, muss die Wechselwirkungsfläche nicht zwangsläufig identisch zu der zu bearbeitenden Teiloberfläche sein. Vielmehr kann sie sich in Abmessungen (bevorzugt in der Mehrzahl der einzelnen Abmessungen, besonders bevorzugt in allen Abmessungen) um einen Faktor g, der von 1 verschieden ist, von den entsprechenden Abmessungen der zu bearbeitenden Teiloberfläche unterscheiden. Unter "Abmessung" ist in diesem Zusammenhang ein Parameterwert bezüglich eines Abmessungs-Parameters gemeint wie beispielsweise einer Länge, einem Winkel, einer Fläche, einem Volumen, einer Krümmung etc. Bevorzugt wird die Mehrzahl, besonders bevorzugt die Gesamtheit, aller Abmessungen in mindestens zwei Raumrichtungen um einen Faktor g im Vergleich zu den entsprechenden Abmessungen der zu bearbeitenden Teiloberfläche verändert, weiterhin insbesondere bevorzugt in alle drei Raumrichtungen. Der Faktor g kann in Bezug auf alle Abmessungen gleich gewählt sein, sich aber auch lokal unterscheiden, so dass eine Mehrzahl an Faktoren g zur Verwendung kommt. Insgesamt kann mit dieser Maßnahme dem Umstand Rechnung getragen werden, dass eine Bearbeitung zuweilen einfacher ist, wenn Wechselwirkungsfläche und zu bearbeitende Teiloberfläche eine geringfügig unterschiedliche Größe aufweisen, also zum Beispiel bis zu 10% voneinander in der Größe abweichen, insbesondere um einen Faktor g, der für alle Abmessungen an den Flächen gleich ist. Allgemein kann also von einer linearen oder gewichteten Skalierung gesprochen werden.

Weiterhin kann die Wechselwirkungsfläche mit einer Oberflächentextur versehen werden, die von jener der zu bearbeitenden Teiloberfläche unterschiedlich ist. Damit kann beispielsweise die Wechselwirkungsfläche eine rauhere Oberfläche aufweisen als die zu bearbeitende Teiloberfläche, was insbesondere für Glättvorgänge an der Teiloberfläche von Nutzen ist.

Eine erfindungsgemäße Vorrichtung zur Bereitstellung eines Steuerbefehlssatzes zur Herstellung eines Bearbeitungswerkzeugs mittels einer generativen Schichtbauvorrichtung umfasst mindestens:
- eine Bereitstellungseinheit, die ausgelegt ist, im Betrieb computerbasierte Modelldaten bereitzustellen, die mindestens eine mit dem Bearbeitungswerkzeug zu bearbeitende Teiloberfläche eines Objekts, welche sich innerhalb eines Kanals durch das Objekt befindet, repräsentieren,
- eine Modellerzeugungseinheit zum Erzeugen eines computerbasierten Modells des Bearbeitungswerkzeugs mit einer mit der zu bearbeitenden Teiloberfläche im Rahmen eines Bearbeitungsvorgangs wechselwirkenden Wechselwirkungsfläche dergestalt, dass die Wechselwirkungsfläche im geometrischen Sinne ähnlich zu der zu bearbeitenden Teiloberfläche des Objekts ist, und
- eine Steuerbefehlssatz-Erzeugungseinheit, die im Betrieb einen Steuerbefehlssatz für eine generative Schichtbauvorrichtung erzeugt, durch den die Herstellung des Bearbeitungswerkzeugs zusammen mit dem Objekt auf der Grundlage des die Wechselwirkungsfläche enthaltenden computerbasierten Modells des Bearbeitungswerkzeugs dergestalt implementiert wird, dass die Wechselwirkungsfläche des Bearbeitungswerkzeugs während der Herstellung über Stützstrukturen mit der zu bearbeitenden Teiloberfläche des Objekts verbunden ist.

Insbesondere ist die erfindungsgemäße Vorrichtung zur Durchführung irgendeiner der Varianten des erfindungsgemäßen Verfahrens zur Bereitstellung eines Steuerbefehlssatzes zur Herstellung eines Bearbeitungswerkzeugs mittels einer generativen Schichtbauvorrichtung geeignet. Bei der erwähnten Bereitstellungseinheit kann es sich um eine Eingangsschnittstelle handeln, welche Daten von einem mobilen Datenträger einlesen kann oder Daten über ein Netzwerk entgegennimmt oder aber Daten direkt aus einer Datenbank ausliest. Die Vorrichtung kann insbesondere nicht nur als separate Einheit implementiert werden, sondern kann Bestandteil eines umfassenderen EDV-Systems sein (beispielsweise eines CAD-Entwurfsystems) oder aber in eine generative Schichtbauvorrichtung integriert sein. In den letztgenannten beiden Fällen handelt es sich bei der Bereitstellungseinheit dann bevorzugt um eine Software-Schnittstelle, die mit anderen Systemkomponenten kommuniziert. Insbesondere muss die erfindungsgemäße Vorrichtung nicht zwangsweise Bestandteil einer generativen Schichtbauvorrichtung sein. Dies ist deshalb von Vorteil, weil unter Umständen CAD-Daten für ein zu bearbeitendes Objekt nicht am Ort der generativen Schichtbauvorrichtung vorliegen, sondern dort, wo das zu bearbeitende Objekt entworfen wurde. Insbesondere ist es somit möglich, ein Objekt zusammen mit einem darauf abgestellten Bearbeitungswerkzeug zu designen.

Eine enge Koppelung der erfindungsgemäßen Vorrichtung zur Erzeugung eines Steuerbefehlssatzes an die generative Schichtbauvorrichtung, für die der Steuerbefehlssatz erzeugt wird, ist von Vorteil, um rasch auf durch die generative Schichtbauvorrichtung vorgegebene technische Randbedingungen reagieren zu können.

Eine erfindungsgemäße generative Schichtbauvorrichtung zur Herstellung einer Anzahl von dreidimensionalen Objekten, wobei die Objekte Schicht für Schicht auf einem Träger hergestellt werden durch Verfestigung eines, insbesondere pulverförmigen, Aufbaumaterials, weist eine erfindungsgemäße Vorrichtung zur Bereitstellung eines Steuerbefehlssatzes zur Herstellung eines Bearbeitungswerkzeugs auf.

Eine enge Koppelung der erfindungsgemäßen Vorrichtung zur Erzeugung eines Steuerbefehlssatzes an die generative Schichtbauvorrichtung, für die der Steuerbefehlssatz erzeugt wird, ist von Vorteil, um rasch auf Veränderungen der technischen Parameter der generativen Schichtbauvorrichtung reagieren zu können.

Bei einem erfindungsgemäßen Herstellverfahren zur Herstellung eines Bearbeitungswerkzeugs mittels einer generativen Schichtbauvorrichtung wird die generative Schichtbauvorrichtung für den Herstellungsvorgang durch einen nach einem erfindungsgemäßen Verfahren bereitgestellten Steuerbefehlssatz angesteuert, durch den die Herstellung des Bearbeitungswerkzeugs zusammen mit dem Objekt dergestalt implementiert wird, dass die Wechselwirkungsfläche des Bearbeitungswerkzeugs während der Herstellung über Stützstrukturen mit der zu bearbeitenden Teiloberfläche des Objekts verbunden ist.

Eine gemeinsame Herstellung eines Objekts und des Bearbeitungswerkzeugs im selben Herstellungsvorgang ermöglicht es, das Bearbeitungswerkzeug so herzustellen, dass es nach seiner Fertigstellung bereits in einem zu bearbeitenden Kanal durch das Objekt angeordnet ist. Dabei ist das Bearbeitungswerkzeug so in dem Kanal durch das Objekt angeordnet, dass es während der Herstellung des Objekts über Stützstrukturen mit den Wänden des Kanals verbunden ist. Wenn das Bearbeitungswerkzeug aus dem Kanal entfernt wird, dann werden im gleichen Arbeitsgang die Stützstrukturen zwischen Bearbeitungswerkzeug und Kanalwänden entfernt, was letztendlich die Entfernung von Stützstrukturen aus Kanälen nach Abschluss des generativen Schichtbauvorgangs erleichtert.

Weiter bevorzugt weisen bei dem erfindungsgemäßen Herstellverfahren die zu bearbeitende Teiloberfläche des Objekts und die Wechselwirkungsfläche während der Herstellung im Wesentlichen die gleiche horizontale Orientierung auf.

Damit die zu bearbeitende Teiloberfläche des Objekts und die Wechselwirkungsfläche des Bearbeitungswerkzeugs möglichst einander gleich bzw. geometrisch ähnlich sind, ist es von Vorteil, wenn beide während ihrer Herstellung mittels eines generativen Schichtbauverfahrens im Wesentlichen die gleiche horizontale Orientierung aufweisen, da in diesem Falle Verzugseffekte, die während der generativen Fertigung auftreten, einander sehr ähnlich sind.

Bevorzugt wird bei dem erfindungsgemäßen Herstellverfahren als Aufbaumaterial in dem generativen Schichtbauverfahren ein Metallpulver verwendet. Gerade bei der Herstellung von Objekten aus Metall ist es oftmals aufgrund der Härte des Materials schwierig, die Oberfläche zu bearbeiten, beispielsweise zu glätten. Um hier zu vermeiden, dass Beschädigungen durch die hohen Kräfte, die ausgeübt werden, entstehen, ist eine erfindungsgemäße Anpassung der Wechselwirkungsfläche an die zu bearbeitende Teiloberfläche von Vorteil.

Ein erfindungsgemäßes Bearbeitungsverfahren zur Bearbeitung eines dreidimensionalen Objekts mittels eines Bearbeitungswerkzeugs weist die Schritte Herstellen des Bearbeitungswerkzeugs durch ein erfindungsgemäßes Herstellverfahren und Bearbeiten des dreidimensionalen Objekts mit dem Bearbeitungswerkzeugs auf.. Die Verwendung eines generativen Schichtbauverfahrens für die Herstellung des Bearbeitungswerkzeugs ermöglicht hier insbesondere dessen zielgerichtete Herstellung für einen ganz bestimmten Bearbeitungsvorgang an einem bestimmten Objekt innerhalb kurzer Zeit.

Bevorzugt handelt es sich bei dem Bearbeitungsverfahren um ein Verfahren, bei dem die Wechselwirkungsfläche des Bearbeitungswerkzeugs mindestens temporär in Wechselwirkung mit der korrespondierenden Teiloberfläche des dreidimensionalen Objekts gebracht wird. Ein Bearbeitungsvorgang kann beispielsweise ein Beschleifen bzw. Glätten der Teiloberfläche des Objekts sein. Insbesondere kann es sich bei dem Bearbeitungsschritt auch um einen Hammer- bzw. Klopfvorganghandeln.

Ein erfindungsgemäßes Computerprogramm umfasst eine Abfolge von Befehlen, durch welche bei ihrer Ausführung ein erfindungsgemäßes Verfahren zur Bereitstellung eines Steuerbefehlssatzes und/oder ein erfindungsgemäßes Herstellungsverfahren implementiert wird.

Die Realisierbarkeit des erfindungsgemäßen Verfahrens zur Erzeugung eines Steuerbefehlssatzes mittels Software ermöglicht eine einfache Installierbarkeit auf verschiedenen EDV-Systemen an verschiedenen Orten (beispielsweise beim Ersteller des Designs des zu bearbeitenden Objekts oder aber beim Anwender, der nach einem geeigneten Bearbeitungswerkzeug für das Objekt sucht). Durch die Herstellung des Bearbeitungswerkzeugs mittels generativer Schichtbaufertigung ist das erfindungsgemäße Vorgehen gerade auch für den Anwender von zu bearbeitenden Objekten von Vorteil, da dadurch rasch eine Nachbehandlung oder geringfügige Abänderung am Objekt durchgeführt werden kann.

Nachfolgend wird die Erfindung unter Zuhilfenahme der Zeichnungen beschrieben. Von den Figuren zeigen:
- Fig. 1: ein Beispiel einer Vorrichtung zur schichtweisen Herstellung von dreidimensionalen Objekten aus einem Pulvermaterial gemäß einem Ausführungsbeispiel der Erfindung,
- Fig. 2: eine dreidimensionale Veranschaulichung eines Objekts zusammen mit dem daran angepassten nicht von den Ansprüchen abgedeckten Bearbeitungswerkzeug,
- Fig. 3: eine schematische Darstellung eines Verfahrens zur Bereitstellung eines Steuerbefehlssatzes für eine generative Schichtbauvorrichtung und
- Fig. 4: den schematischen Aufbau einer Vorrichtung zur Bereitstellung eines Steuerbefehlssatzes zur Herstellung eines Bearbeitungswerkzeugs und
- Fig. 5: ein Ausführungsbeispiel für ein Objekt zusammen mit dem daran angepassten Bearbeitungswerkzeug.

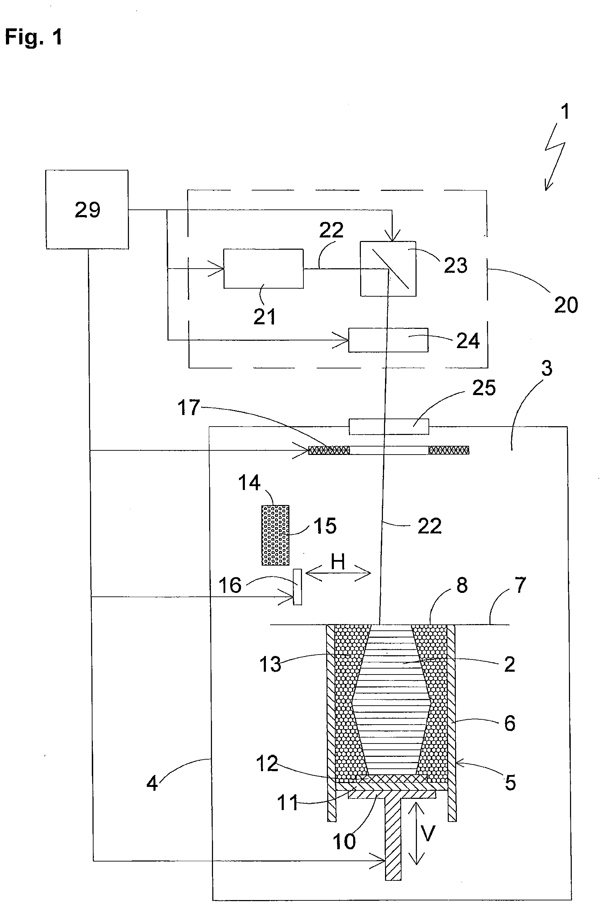

Im Folgenden werden zunächst mit Bezug auf Fig. 1 Merkmale einer Lasersinter- oder - schmelzvorrichtung 1 als Beispiel einer generativen Schichtbauvorrichtung beschrieben, mittels derer das erfindungsgemäße Verfahren zum Herstellen eines Bearbeitungswerkzeugs durchgeführt werden kann. Die gezeigte Vorrichtung zeigt somit auch Merkmale einer erfindungsgemäßen Herstellvorrichtung für ein Bearbeitungswerkzeug.

Zum Aufbauen eines Objekts 2 enthält die Schichtbauvorrichtung eine Prozesskammer 3 mit einer Kammerwandung 4. In der Prozesskammer 3 ist ein nach oben offener Behälter 5 mit einer Behälterwandung 6 angeordnet. Die vertikale Lage der oberen Öffnung des Behälters 5 definiert eine Arbeitsebene 7, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 angebracht sein, auf der das Objekt 2 aufgebaut wird. Das Objekt 2 kann aber auch auf der Grundplatte 11 selbst aufgebaut werden, die dann als Bauplattform dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 auf das Baufeld 8. In der Prozesskammer ist ferner eine (optionale) Strahlungsheizung 17 angeordnet, die zum Beheizen des auf das Baufeld 8 aufgebrachten Aufbaumaterials 15 dient. Die Strahlungsheizung 17 ist beispielsweise als Infrarotstrahler ausgebildet.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um einen Betrag abgesenkt, der der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf. Das Aufbringen erfolgt zumindest über den gesamten Querschnitt des herzustellenden Objekts 2, vorzugsweise über das gesamte Baufeld 8, also den Bereich der Arbeitsebene 7, unterhalb dessen der Träger vertikal abgesenkt wird. Anschließend wird das pulverförmige Aufbaumaterial optional durch die Strahlungsheizung 17 aufgeheizt. Nach Erreichen einer Arbeitstemperatur wird der Querschnitt des herzustellenden Objekts 2 von dem Laserstrahl 22 abgetastet, so dass das pulverförmige Aufbaumaterial 15 an den Stellen wird, die dem Querschnitt des herzustellenden Objekts 2 entsprechen, mittels Wärmezufuhr zumindest teilweise aufgeschmolzen wird, sodass es nach einer Abkühlung verfestigt ist, sich also zu einem Festkörper verbunden hat. Diese Schritte werden solange wiederholt, bis das Objekt 2 fertiggestellt ist und der Prozesskammer 3 entnommen werden kann.

Als pulverförmiges Aufbaumaterial können alle für das Lasersinter- bzw. -schmelzverfahren geeigneten Pulver bzw. Pulvermischungen verwendet werden. Solche Pulver umfassen z. B. Kunststoffpulver wie Polyamid oder Polystyrol, PAEK (Polyaryl Ether Ketone), Elastomere, wie PEBA (Polyether Block Amide), kunststoffbeschichteten Sand, Keramikpulver oder Metallpulver, z. B. Edelstahlpulver oder andere, an den jeweiligen Zweck angepasste Metallpulver, insbesondere Legierungen.

In der soeben beispielhaft beschriebenen generativen Schichtbauvorrichtung ist die Steuereinrichtung 29 so angepasst, dass das erfindungsgemäße Verfahren zur Herstellung eines Bearbeitungswerkzeugs in der Schichtbauvorrichtung durchgeführt werden kann. Ein Herstellvorgang geht dabei so vonstatten, dass die Steuereinheit 29 einen Steuerbefehlssatz abarbeitet, bei dem es sich um Anweisungen handelt, Schichten des Aufbaumaterials nacheinander aufzutragen und Bereiche der jeweiligen Schichten, die dem Querschnitt eines herzustellenden Objektes entsprechen, selektiv mit der Laserstrahlung zu bestrahlen. In dem Steuerbefehlssatz sind also Informationen über die innerhalb einer Schicht zu verfestigenden Stellen sowie die Art der Zerlegung des herzustellenden Objektes in Schichten enthalten.

Im Detail basiert der Steuerbefehlssatz auf einem computerbasierten Modell des oder der herzustellenden Objekte, bevorzugt einem CAD-Volumenmodell. Des Weiteren fließen in den Steuerbefehlssatz auch herstellungsspezifische Informationen ein, beispielsweise die Lage und Orientierung der Objekte im Behälter 5. Schließlich ist in dem Steuerbefehlssatz auch die Schichtinformation enthalten, d.h. in welcher Weise das oder die herzustellenden Objekte in Schichten unterteilt sind, die den Aufbaumaterialschichten während der schichtweisen generativen Herstellung entsprechen. Der Steuerbefehlssatz legt für jede Aufbaumaterialschicht während der Herstellung insbesondere die Dicke des Schichtauftrags und die Stellen, an denen durch Strahlungszufuhr eine Verfestigung des Aufbaumaterials bewirkt werden soll, fest. Insbesondere enthält der Steuerbefehlssatz auch alle zur Steuerung der Belichtungsvorrichtung erforderlichen Daten, wodurch u.a. die Energiedichte der der von der Belichtungsvorrichtung emittierten Strahlung und gegebenenfalls die Verfahrgeschwindigkeit des Strahls über das Baufeld 8 festgelegt werden.

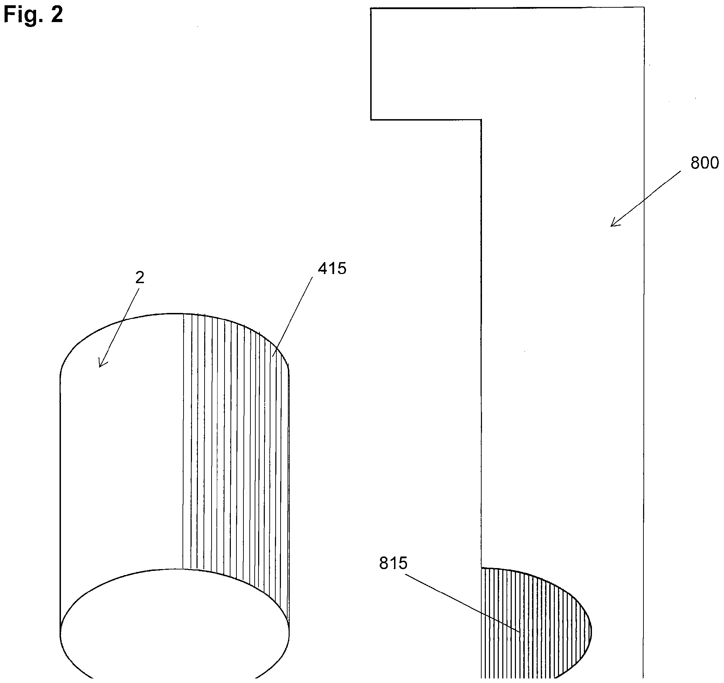

Das Vorgehen wird nachfolgend beispielhaft unter Bezugnahme auf die Fig. 2 bis 5 beschrieben.

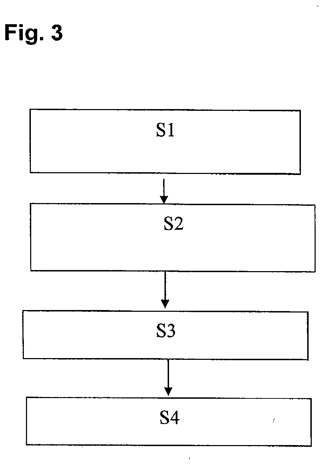

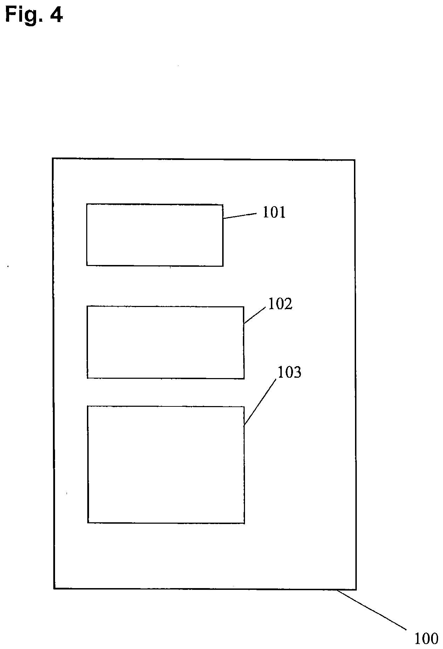

Wie in Figur 4 gezeigt, enthält eine erfindungsgemäße Vorrichtung 100 zur Bereitstellung eines Steuerbefehlssatzes für eine bestimmte generative Schichtbauvorrichtung eine Bereitstellungseinheit 101, eine Modellerzeugungseinheit 102 und eine Steuerbefehlssatz-Erzeugungseinheit 103. Die Funktionsweise der Vorrichtung 100 zur Bereitstellung eines Steuerbefehlssatzes wird unter Bezugnahme auf Figur 3 beschrieben. Figur 2 zeigt dabei ein konkretes Beispiel, das nicht durch die Ansprüche abgedeckt ist.

Zunächst werden von der Bereitstellungseinheit 101 (CAD)-Modelldaten MD eines durch ein Bearbeitungswerkzeug zu bearbeitenden Objekts entgegengenommen. (Schritt S1 in Fig. 3). Die Bereitstellungseinheit 101 kann die Modelldaten entweder durch Zugriff auf einen Datenspeicher oder über ein Netzwerk oder einen mobilen Datenträger erhalten. Insbesondere kann die Bereitstellungseinheit 101 direkt auf einen Datenbankspeicher zugreifen oder aber über ein Netzwerk auf eine Datenbank zugreifen. Die Modelldaten müssen nicht zwangsläufig das gesamte zu bearbeitende Objekt repräsentieren. Sie müssen jedoch zumindest eine Teiloberfläche des Objekts, mit der das Bearbeitungswerkzeug wechselwirken soll, repräsentieren. In der Figur 2 ist als zu bearbeitendes Objekt 2 beispielhaft ein Zylinder gezeigt.

Als nächstes werden durch die Modellerzeugungseinheit 102 in den Modelldaten jene Subdaten identifiziert, die die mindestens eine mit dem Bearbeitungswerkzeug zu bearbeitende Teiloberfläche des Objekts repräsentieren (Schritt S2 in Fig. 3). Hierbei können die Gestalt, Größe und Lage der Teiloberfläche am zu bearbeitenden Objekt bereits in den Modelldaten gekennzeichnet sein oder aber ein Nutzer der Vorrichtung 100 kann interaktiv durch eine Eingabe an einer optional mit der Vorrichtung 100 verbundenen Eingabeschnittstelle die Gestalt, Größe und Lage der Teiloberfläche am zu bearbeitenden Objekt spezifizieren, woraufhin die der Spezifikation entsprechenden Subdaten in den Modelldaten MD identifiziert werden. Im Beispiel der Figur 2 handelt es sich bei der zu bearbeitenden Teiloberfläche 415 um die mit senkrechten Streifen gezeichnete rechte Hälfte der Zylinderfläche (lediglich der zum Betrachter weisende Teil der zu bearbeitenden Teiloberfläche ist zu sehen).

Nachfolgend erstellt die Modellerzeugungseinheit 102 eine Kopie der die Teiloberfläche repräsentierenden Daten und integriert die resultierenden Daten (im Folgenden als Wechselwirkungsdaten bezeichnet) so in Modell-Basisdaten des Bearbeitungswerkzeugs (Schritt S3 in Fig. 3), dass Innen- und Außenseite der ursprünglichen Teiloberfläche vertauscht sind. Bei den Modell-Basisdaten des Bearbeitungswerkzeugs handelt es sich dabei um Daten, die eine im Vorhinein definierte Grundform des Bearbeitungswerkzeugs repräsentieren.

Im Beispiel der Figur 2 weist das Bearbeitungswerkzeug 800 als Grundform eine Stabform auf. Man erkennt in Fig. 2 (durch Streifen gekennzeichnet und nur teilweise erkennbar) die Wechselwirkungsfläche 815 als Kopie der Teiloberfläche 415. Insbesondere erkennt man, dass durch die Integration der Wechselwirkungsdaten in die Basis-Modelldaten die Grundform (also die Stabform) so abgeändert wurde, dass sie nun eine Teiloberfläche (Wechselwirkungsfläche) 815 aufweist, die eine Gegenform (bzw. Komplementärform) zur zu bearbeitenden Teiloberfläche 415 ist. Die konkave Wechselwirkungsfläche 815 ist damit identisch zur Teiloberfläche 415 bis auf die Tatsache, dass Innen- und Außenseite vertauscht sind, also an allen Stellen der nach außen weisende Normalenvektor auf die Fläche seine Richtung um 180° verändert hat.

In manchen Fällen lässt sich eine Gegenform zu einer Fläche im Raum dadurch ermitteln, dass an jedem Punkt der Fläche die Vorzeichen aller Schnittkrümmungen umgekehrt werden. Allerdings stößt solch eine Beschreibung auf Schwierigkeiten, wenn es sich z.B. bei der Teiloberfläche um einen würfelförmigen Vorsprung handelt. Solch ein Fall einer Teiloberfläche mit Ecken und Kanten ist von der Erfindung ebenfalls umfasst, weshalb das erfinderische Vorgehen mit den Begriffen "Gegenform" bzw. "Komplementärform" oder "im geometrischen Sinne analoge Form" umschrieben wird, die auch z.B. eine würfelförmige Ausnehmung als Wechselwirkungsfläche umschreiben sollen.

Die genaue Position der Wechselwirkungsfläche am Bearbeitungswerkzeug kann bereits in den Modell-Basisdaten des Bearbeitungswerkzeugs spezifiziert sein oder aber ein Nutzer der Vorrichtung 100 kann interaktiv durch eine Eingabe an einer optional mit der Vorrichtung 100 verbundenen Eingabeschnittstelle die Lage der Wechselwirkungsfläche am zu bearbeitenden Objekt spezifizieren.

Sobald ein computerbasiertes vollständiges Modell des Bearbeitungswerkzeug vorliegt, wird von der Steuerbefehlssatz-Erzeugungseinheit 103 ein Steuerbefehlssatz generiert (Schritt S4 in Fig. 3), in den die Modelldaten des Bearbeitungswerkzeugs integriert sind, so dass eine generative Schichtbauvorrichtung bei Abarbeitung des Steuerbefehlssatzes das Bearbeitungswerkzeug herstellen kann. Es sei hier angemerkt, dass die von den Modelldaten des Bearbeitungswerkzeugs unabhängigen Parameter, die in dem Steuerbefehlssatz festgelegt werden, normalerweise standardmäßig für eine bestimmte generative Schichtbauvorrichtung vorgegeben sind und unabhängig von der Gestalt eines herzustellenden Bauteils in den Steuerbefehlssatz für die Herstellung eines bestimmten Bauteils übernommen werden können. Sobald ein entsprechender Steuerbefehlssatz vorliegt, kann das Bearbeitungswerkzeug auf der zugeordneten generativen Schichtbauvorrichtung hergestellt werden und nach Fertigstellung zur Bearbeitung des zu bearbeitenden Objekts mittels der Wechselwirkungsfläche an dem Bearbeitungswerkzeug eingesetzt werden.

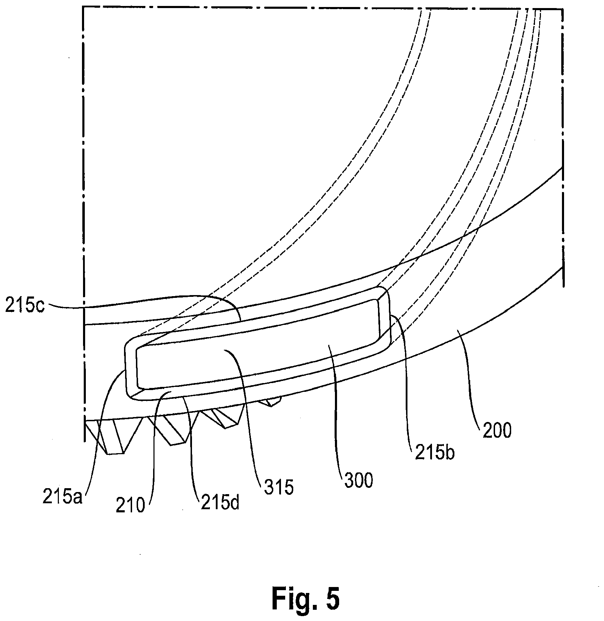

In einer Abwandlung liegen zunächst überhaupt keine Modell-Basisdaten des Bearbeitungswerkzeugs vor. Vielmehr wird nach Ermittlung der Wechselwirkungsfläche eine Gestalt des Bearbeitungswerkzeugs generiert, die an die Gestalt der Wechselwirkungsfläche angepasst ist. Solch ein Vorgehen ist insbesondere bei dem nachfolgend beschriebenen Ausführungsbeispiel der Erfindung gemäß Fig. 5, aber nicht nur dort, möglich.

Fig. 5 zeigt einen Abschnitt eines Objekts 200, mit einer kreisringsegmentförmigen Ausnehmung 210 und ein an diese angepasstes Bearbeitungswerkzeug 300. Bei dem erfindungsgemäßen Verfahren zur Bereitstellung eines Steuerbefehlssatzes werden zunächst jene Subdaten in einem (CAD)-Modell des Objekts 200 ermittelt, die die Seitenwände 215a bis 215d des Hohlraums 210 in dem Objekt 200 repräsentieren. Zur Gewinnung der Wechselwirkungsflächendaten für das Bearbeitungswerkzeug wird zunächst eine Kopie dieser Subdaten erstellt und nachfolgend mit einem Größenveränderungsfaktor g, bei dem es sich um eine Zahl geringfügig kleiner als 1 handelt, so multipliziert, dass die resultierenden Wechselwirkungsdaten eine Oberfläche repräsentieren, die um den Größenveränderungsfaktor g in all ihren Abmessungen kleiner ist als die ursprünglichen Flächen 215a bis 215d.

Wie man in Fig. 5 erkennt, ist die so definierte Oberfläche 315 die Oberfläche eines Kreisringsegments. Zur vollständigen Festlegung der Gestalt des Bearbeitungswerkzeugs 300 werden gemäß diesem Ausführungsbeispiel die Stirnflächen des Kreisringsegments so festgelegt, dass sie mit den (offenen) Enden des Hohlraums 210 im Objekt im Wesentlichen zusammenfallen. Auf diese Weise muss also überhaupt keine Grundform des Bearbeitungswerkzeugs im Vorhinein festgelegt werden.

Das soeben beschriebene kreisringsegmentförmige Bearbeitungswerkzeug 300 kann nun nach seiner Herstellung mittels einer generativen Schichtbauvorrichtung, die den von der Vorrichtung 100 bereitgestellten Steuerbefehlssatz abarbeitet, wie ein Meißel in den Hohlraum 210 des Objekts eingeschlagen werden, um Vorsprünge an den Wänden des Hohlraums 210 zu entfernen. Insbesondere ist dies notwendig, wenn das Objekt 200 seinerseits mittels eines generativen Schichtbauverfahrens hergestellt wurde und während des Bauvorgangs Stützelemente in dem Hohlraum ausgebildet wurden, die nach Fertigstellung des Objekts 200 wieder entfernt werden müssen. Durch die angepasste Form des Bearbeitungswerkzeugs 300 kann trotz der komplizierten Gestaltung des Hohlraums 210 eine präzise Wechselwirkung der Wechselwirkungsfläche 315 mit den Wänden 215a bis 215d des Hohlraums 210 stattfinden, so dass die Stützelemente oder Reste derselben effektiv aus demselben entfernt werden.

Bei dem mit Bezug auf Fig. 5 beschriebenen Vorgehens wird das Bearbeitungswerkzeug 300 zusammen mit dem Objekt 200 mittels eines generativen Schichtbauverfahrens hergestellt. Dabei wird der Steuerbefehlssatz so festgelegt, dass das Bearbeitungswerkzeug 300 in dem Hohlraum 210 zusammen mit dem Objekt 200 hergestellt wird. Dabei werden Stützelemente zwischen dem Bearbeitungswerkzeug 300 und den Wänden 215a bis 215d des Hohlraums während der generativen Schichtbaufertigung ausgebildet. Auf diese Weise dient das Bearbeitungswerkzeug 300 selbst zusammen mit diesen (nicht gezeigten) Stützelementen zur Stabilisierung des Hohlraums 210 während der Herstellung des Objekts 200. Um nun die Stützelemente aus dem Hohlraum nach der Fertigstellung des Objekts 200 zu entfernen, muss lediglich auf die Stirnseite des Bearbeitungswerkzeugs 300 geschlagen werden, wodurch das Bearbeitungswerkzeug 300 zusammen mit den Stützelementen aus dem Hohlraum 210 herausgeschlagen wird. Durch die spezielle Gestaltung der Wechselwirkungsfläche 315 kann somit auf einfache und elegante Weise die Innenfläche des Hohlraums 210 von Stützelementen befreit werden.

In einer Abwandlung der Erfindung wird die Wechselwirkungsfläche des Bearbeitungswerkzeugs vor der Herstellung noch mit einer speziellen Oberflächentextur versehen. Beispielsweise kann eine Sägezahnstruktur oder eine andere rauhe Oberflächentextur in den Modelldaten des Bearbeitungswerkzeugs dementsprechend spezifiziert werden und das Bearbeitungswerkzeug dann mit solch einer abgeänderten Oberfläche hergestellt werden. Auf diese Weise ist es beispielsweise möglich, Schleif- bzw. Glättwerkzeuge herzustellen, die speziell an eine zu bearbeitende Teiloberfläche eines Objekts angepasst sind.

Auch wenn weiter oben als Beispiel einer generativen Schichtbauvorrichtung lediglich eine Lasersintervorrichtung beschrieben wurde, so ist das erfindungsgemäße Vorgehen natürlich auch auf andere generative Schichtbauvorrichtungen und -verfahren anwendbar. Hier seien lediglich beispielhaft das Laserschmelzen, LLM (Ausschneiden aus Folien und Fügen), FLM (Aufbringen eines thermoplastischen Materials aus einer Düse), 3D-Drucken, Maskensinterverfahren und stereolithografische Verfahren genannt.

Weiterhin ist die Erfindung nicht auf den Entwurf, die Herstellung und Bearbeitung jeweils eines einzelnen Bauteils beschränkt. Werden mehrere (beispielsweise unterschiedliche) Bauteile gleichzeitig hergestellt, dann kann das erfindungsgemäße Verfahren mit allen Varianten in gleicher Weise durchgeführt werden.

Abschließend sei noch erwähnt, dass eine Vorrichtung 100 zur Bereitstellung eines Steuerbefehlssatzes einer generativen Schichtbauvorrichtung nicht nur allein durch Softwarekomponenten, sondern auch allein durch Hardware-Komponenten oder Mischungen aus Hard- und Software realisiert sein kann. In der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise, wenn die darüber eingespeisten bzw. ausgegebenen Daten von bereits auf dem gleichen Gerät realisierten anderen Komponenten übernommen werden können oder an eine andere Komponente nur softwaremäßig übergeben werden müssen. Ebenso könnten die Schnittstellen aus Hardware- und Software-Komponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle, zusammengefasst sein.

## Patentansprüche

1. Verfahren zur Bereitstellung eines Steuerbefehlssatzes zur Herstellung eines Bearbeitungswerkzeugs mittels einer generativen Schichtbauvorrichtung, umfassend mindestens folgende Schritte:
- Bereitstellung von computerbasierten Modelldaten (MD), die mindestens eine mit dem Bearbeitungswerkzeug zu bearbeitende Teiloberfläche eines Objekts repräsentieren, welche sich innerhalb eines Kanals durch das Objekt befindet,
- Erzeugen eines computerbasierten Modells des Bearbeitungswerkzeugs mit einer mit der mindestens einen Teiloberfläche im Rahmen eines Bearbeitungsvorgangs wechselwirkenden Wechselwirkungsfläche dergestalt, dass die Wechselwirkungsfläche im geometrischen Sinne ähnlich zu der zu bearbeitenden Teiloberfläche des Objekts ist,
- Erzeugen eines Steuerbefehlssatzes für eine generative Schichtbauvorrichtung, durch den die Herstellung des Bearbeitungswerkzeugs zusammen mit dem Objekt auf der Grundlage des die Wechselwirkungsfläche enthaltenden computerbasierten Modells des Bearbeitungswerkzeugs dergestalt implementiert wird, dass die Wechselwirkungsfläche des Bearbeitungswerkzeugs während der Herstellung über Stützstrukturen mit der zu bearbeitenden Teiloberfläche des Objekts verbunden ist.

2. Verfahren nach Anspruch 1, wobei das Bearbeitungswerkzeug so ausgelegt ist, dass mit der Wechselwirkungsfläche eine Oberflächenbearbeitung und/oder ein formschlüssiges Anfitten der bzw. an die mindestens eine(n) Teiloberfläche des zu bearbeitenden Objekts möglich ist.

3. Verfahren nach Anspruch 1 oder 2, wobei das Bearbeitungswerkzeug so ausgelegt ist, dass damit nach der Herstellung die Stützstrukturen entfernt werden können.

4. Verfahren nach einem der Ansprüche 1 bis 3, wobei Abmessungen in mindestens einer Raumrichtung, bevorzugt die Mehrzahl der Abmessungen in mindestens einer Raumrichtung, besonders bevorzugt alle Abmessungen in mindestens einer Raumrichtung, der Wechselwirkungsfläche sich um einen Faktor g, der von 1 verschieden ist, von den entsprechenden Abmessungen der zu bearbeitenden Teiloberfläche unterscheiden.

5. Verfahren nach einem der Ansprüche 1 bis 4, wobei die Wechselwirkungsfläche mit einer Oberflächentextur versehen wird, die von jener der zu bearbeitenden Teiloberfläche unterschiedlich ist.

6. Vorrichtung zur Bereitstellung eines Steuerbefehlssatzes zur Herstellung eines Bearbeitungswerkzeugs mittels einer generativen Schichtbauvorrichtung, mindestens umfassend:
- eine Bereitstellungseinheit (101), die ausgelegt ist, im Betrieb computerbasierte Modelldaten bereitzustellen, die mindestens eine mit dem Bearbeitungswerkzeug zu bearbeitende Teiloberfläche eines Objekts, welche sich innerhalb eines Kanals durch das Objekt befindet, repräsentieren,
- eine Modellerzeugungseinheit (102) zum Erzeugen eines computerbasierten Modells des Bearbeitungswerkzeugs mit einer mit der zu bearbeitenden Teiloberfläche im Rahmen eines Bearbeitungsvorgangs wechselwirkenden Wechselwirkungsfläche dergestalt, dass die Wechselwirkungsfläche im geometrischen Sinne ähnlich zu der zu bearbeitenden Teiloberfläche des Objekts ist, und
- eine Steuerbefehlssatz-Erzeugungseinheit (103), die im Betrieb einen Steuerbefehlssatz für eine generative Schichtbauvorrichtung erzeugt, durch den die Herstellung des Bearbeitungswerkzeugs zusammen mit dem Objekt auf der Grundlage des die Wechselwirkungsfläche enthaltenden computerbasierten Modells des Bearbeitungswerkzeugs dergestalt implementiert wird, dass die Wechselwirkungsfläche des Bearbeitungswerkzeugs während der Herstellung über Stützstrukturen mit der zu bearbeitenden Teiloberfläche des Objekts verbunden ist.

7. Generative Schichtbauvorrichtung zur Herstellung einer Anzahl von dreidimensionalen Objekten, wobei die Objekte Schicht für Schicht auf einem Träger (10, 11, 12) hergestellt werden durch Verfestigung eines, insbesondere pulverförmigen, Aufbaumaterials (15), wobei die generative Schichtbauvorrichtung eine Vorrichtung nach Anspruch 6 aufweist.

8. Herstellverfahren zur Herstellung eines Bearbeitungswerkzeugs mittels einer generativen Schichtbauvorrichtung,
wobei die generative Schichtbauvorrichtung für den Herstellungsvorgang durch einen Steuerbefehlssatz angesteuert wird, der vorher durch ein Verfahren nach einem der Ansprüche 1 bis 5 bereitgestellt wird und durch den die Herstellung des Bearbeitungswerkzeugs zusammen mit dem Objekt dergestalt implementiert wird, dass die Wechselwirkungsfläche des Bearbeitungswerkzeugs während der Herstellung über Stützstrukturen mit der zu bearbeitenden Teiloberfläche des Objekts verbunden ist.

9. Herstellverfahren nach Anspruch 8, wobei nach der Herstellung das Bearbeitungswerkzeug aus dem Kanal entfernt wird, wodurch die Stützstrukturen zwischen Bearbeitungswerkzeug und Kanalwänden entfernt werden.

10. Herstellverfahren nach Anspruch 9, bei dem durch Schlagen auf eine Stirnseite des Bearbeitungswerkzeugs das Bearbeitungswerkzeug zusammen mit den Stützelementen aus dem Kanal (210) entfernt wird.

11. Herstellverfahren nach einem der Ansprüche 8 bis 10, wobei die mindestens eine Teiloberfläche und die Wechselwirkungsfläche während der Herstellung im Wesentlichen die gleiche horizontale Orientierung aufweisen.

12. Herstellverfahren nach einem der Ansprüche 8 bis 11, wobei als Aufbaumaterial, das in dem generativen Schichtbauverfahren verwendet wird, ein Metallpulver verwendet wird.

13. Bearbeitungsverfahren zur Bearbeitung eines dreidimensionalen Objekts mittels eines Bearbeitungswerkzeugs mit folgenden Schritten:
- Herstellen des Bearbeitungswerkzeugs durch ein Herstellverfahren nach einem der Ansprüche 8 bis 12,
Bearbeiten des dreidimensionalen Objekts mit dem Bearbeitungswerkzeugs.

14. Computerprogramm, das eine Abfolge von Befehlen umfasst, durch welche bei ihrer Ausführung ein Verfahren nach einem der Ansprüche 1 bis 5 und/oder ein Herstellungsverfahren nach einem der Ansprüche 8 bis 13 implementiert wird.

## Claims

1. A method of providing a control command set for producing a processing tool by means of an additive layer-wise building device, which method comprises at least the following steps:
- providing computer-based model data (MD) representing at least one sub-surface of an object, which sub-surface is to be processed using the processing tool and which is located within a channel through the object,
- generating a computer-based model of the processing tool having an interaction surface interacting with the at least one sub-surface in the context of a processing process in such a way that the interaction surface is similar in the geometric sense to the sub-surface of the object to be processed,
- generating a control command set for an additive layer-wise building device, by means of which control command set the production of the processing tool together with the object is implemented on the basis of the computer-based model of the processing tool comprising the interaction surface in such a way that during the production, the interaction surface of the processing tool is connected via support structures to the sub-surface of the object to be processed.

2. The method of claim 1, wherein the processing tool is designed such that the interaction surface allows a surface processing of and/or fitting in a form-fitting manner to the at least one sub-surface of the object to be processed.

3. The method of claim 1 or 2, wherein the processing tool is designed such that by means of the processing tool the support structures can be removed after the production.

4. The method of one of claims 1 to 3, wherein dimensions in at least one spatial direction, preferably the majority of dimensions in at least one spatial direction, particularly preferably all dimensions in at least one spatial direction, of the interaction surface differ by a factor g, which is different from 1, from the corresponding dimensions of the sub-surface to be processed.

5. The method of one of claims 1 to 4, wherein the interaction surface is provided with a surface texture which is different from the surface texture of the sub-surface to be processed.

6. A device for providing a control command set for producing a processing tool by means of an additive layer-wise building device at least comprises:
- a provisioning unit (101) which is configured to provide, in operation, computer-based model data representing at least one sub-surface of an object, which sub-surface is to be processed using the processing tool and which is located within a channel through the object,
- a model generating unit (102) for generating a computer-based model of the processing tool having an interaction surface interacting with the sub-surface to be processed in the context of a processing process in such a way that the interaction surface is similar in the geometric sense to the sub-surface of the object to be processed, and
- a control command set generating unit (103) which upon operation generates a control command set for an additive layer-wise building device, by means of which control command set the production of the processing tool together with the object is implemented on the basis of the computer-based model of the processing tool comprising the interaction surface in such a way that during the production, the interaction surface of the processing tool is connected via support structures to the sub-surface of the object to be processed.

7. An additive layer-wise building device for producing a number of three-dimensional objects, wherein the objects are produced layer by layer on a support (10, 11, 12) by solidifying a building material (15), in particular a building material in powder form, wherein the additive layer-wise building device comprises a device according to claim 6.

8. A production method of producing a processing tool by means of an additive layer-wise building device,
wherein for the production process the additive layer-wise building device is controlled by means of a control command set provided in advance by a method according to one of claims 1 to 5 and by means of which control command set the production of the processing tool together with the object is implemented in such a way that, during the production, the interaction surface of the processing tool is connected via support structures to the sub-surface of the object to be processed.

9. The production method of claim 8, wherein the processing tool is removed from the channel after the production, whereby the support structures between the processing tool and the cannel walls are removed.

10. The production method of claim 9, wherein the processing tool is removed from the channel (210) together with the support elements by hitting an end face of the processing tool.

11. The production method of one of claims 8 to 10, wherein the at least one sub-surface and the interaction surface have substantially the same horizontal orientation during production.

12. The production method of one of claims 8 to 11, wherein a metal powder is used as the building material that is used in the additive layer-wise building process.

13. A processing method of processing a three-dimensional object using a processing tool, comprising the following steps:
- producing the processing tool by a production method according to one of claims 8 to 12,
- processing the three-dimensional object with the processing tool.

14. A computer program comprising a sequence of commands by which commands a method according to one of claims 1 to 5 and/or a production method according to one of claims 8 to 13 is implemented when the commands are executed.

## Revendications

1. Procédé pour la fourniture d'un jeu d'instructions de commande pour la fabrication d'un outil d'usinage au moyen d'un dispositif de construction par couches additive, comprenant au moins les étapes suivantes :
- la fourniture de données de modèle (MD) informatiques, qui représentent au moins une surface partielle à usiner avec l'outil d'usinage d'un objet, laquelle se trouve à l'intérieur d'un canal à travers l'objet,
- la génération d'un modèle informatique de l'outil d'usinage avec une surface d'interaction interagissant avec l'au moins une surface partielle dans le cadre d'un processus d'usinage, de telle sorte que la surface d'interaction est au sens géométrique similaire à la surface partielle à usiner de l'objet,
- la génération d'un jeu d'instructions de commande pour un dispositif de construction par couches additive, par lequel la fabrication de l'outil d'usinage conjointement avec l'objet sur la base du modèle informatique de l'outil d'usinage contenant la surface d'interaction est implémentée de telle sorte que la surface d'interaction de l'outil d'usinage est reliée pendant la fabrication à la surface partielle à usiner de l'objet par l'intermédiaire de structures d'appui.

2. Procédé selon la revendication 1, dans lequel l'outil d'usinage est conçu de sorte qu'avec la surface d'interaction un usinage de surface et/ou un raccord par coopération de formes de ou à l'au moins une surface partielle de l'objet à usiner est possible.

3. Procédé selon la revendication 1 ou 2, dans lequel l'outil d'usinage est conçu de sorte qu'avec celui-ci les structures d'appui peuvent être retirées après la fabrication.

4. Procédé selon l'une quelconque des revendications 1 à 3, dans lequel les dimensions dans au moins une direction spatiale, de préférence la pluralité des dimensions dans au moins une direction spatiale, de manière particulièrement préférée toutes les dimensions dans au moins une direction spatiale, de la surface d'interaction se distinguent d'un facteur g, qui est différent de 1, des dimensions correspondantes de la surface partielle à usiner.

5. Procédé selon l'une quelconque des revendications 1 à 4, dans lequel la surface d'interaction est pourvue d'une texture superficielle, qui est différente de celle de la surface partielle à usiner.

6. Dispositif pour la fourniture d'un jeu d'instructions de commande pour la fabrication d'un outil d'usinage au moyen d'un dispositif de construction par couches additive, comprenant au moins :
- une unité de fourniture (101), qui est conçue pour fournir des données de modèle informatiques lors du fonctionnement, qui représentent au moins une surface partielle d'un objet à usiner avec l'outil d'usinage, laquelle se trouve à l'intérieur d'un canal à travers l'objet,
- une unité de génération de modèle (102) pour la génération d'un modèle informatique de l'outil d'usinage avec une surface d'interaction interagissant avec la surface partielle à usiner dans le cadre d'un processus d'usinage, de telle sorte que la surface d'interaction est au sens géométrique similaire à la surface partielle à usiner de l'objet, et
- une unité de génération de jeu d'instructions de commande (103), qui génère lors du fonctionnement un jeu d'instructions de commande pour un dispositif de construction par couches additive, par lequel la fabrication de l'outil d'usinage conjointement avec l'objet sur la base du modèle informatique de l'outil d'usinage contenant la surface d'interaction est implémentée de telle sorte que la surface d'interaction de l'outil d'usinage est reliée pendant la fabrication à la surface partielle à usiner de l'objet par l'intermédiaire de structures d'appui.

7. Dispositif de construction par couches additive pour la fabrication d'un certain nombre d'objets tridimensionnels, dans lequel les objets sont fabriqués couche par couche sur un support (10, 11, 12) par solidification d'un matériau constitutif (15), en particulier pulvérulent, dans lequel le dispositif de construction par couches additive présente un dispositif selon la revendication 6.

8. Procédé de fabrication pour la fabrication d'un outil d'usinage au moyen d'un dispositif de construction par couches additive,
dans lequel le dispositif de construction par couches additive pour le processus de fabrication est commandé par un jeu d'instructions de commande, qui est fourni auparavant par un procédé selon l'une quelconque des revendications 1 à 5 et par lequel la fabrication de l'outil d'usinage conjointement avec l'objet est implémentée de telle sorte que la surface d'interaction de l'outil d'usinage pendant la fabrication est reliée à la surface partielle à usiner de l'objet par l'intermédiaire de structures d'appui.

9. Procédé de fabrication selon la revendication 8, dans lequel après la fabrication l'outil d'usinage est retiré du canal, ce qui a pour effet que les structures d'appui entre l'outil d'usinage et les parois de canal sont retirées.

10. Procédé de fabrication selon la revendication 9, selon lequel l'outil d'usinage est retiré conjointement avec les éléments d'appui du canal (210) par frappe sur une face frontale de l'outil d'usinage.

11. Procédé de fabrication selon l'une quelconque des revendications 8 à 10, dans lequel l'au moins une surface partielle et la surface d'interaction présentent pendant la fabrication sensiblement la même orientation horizontale.

12. Procédé de fabrication selon l'une quelconque des revendications 8 à 11, dans lequel une poudre métallique est utilisée comme matériau constitutif, qui est utilisé dans le procédé de construction par couches additive.

13. Procédé d'usinage pour l'usinage d'un objet tridimensionnel au moyen d'un outil d'usinage avec les étapes suivantes :
- la fabrication de l'outil d'usinage par un procédé de fabrication selon l'une quelconque des revendications 8 à 12,
l'usinage de l'objet tridimensionnel avec l'outil d'usinage.

14. Programme informatique, qui comprend une succession d'instructions, par lesquelles lors de leur exécution un procédé selon l'une quelconque des revendications 1 à 5 et/ou un procédé de fabrication selon l'une quelconque des revendications 8 à 13 est implémenté.
